# EUROPEAN PATENT APPLICATION

(11) **EP 4 768 281 A1**
(43) Date of publication of application: **01.07.2026**
(21) Application number: 25217336.4
(22) Date of filing: 20.11.2025
(51) Int. Cl.: B60C 11/03, B60C 11/12, B60C 11/13

(54) **TIRE**

(30) Priority: 18.12.2024 JP 2024222319
(71) Applicant: Sumitomo Rubber Industries, Ltd., Kobe-shi, Hyogo 651-0072 (JP)
(72) Inventor: ITO, SHUHEI, Kobe-shi, Hyogo, 651-0072 (JP)
(74) Representative: Manitz Finsterwald Patent- und Rechtsanwaltspartnerschaft mbB

(57) **Abstract**

A tire 1 has a plurality of circumferential grooves 3 and a plurality of land portions 4. The plurality of land portions 4 include an outer land portion 4A disposed on the outermost side in the tire axial direction, and an inner land portion 4B disposed inward of the outer land portion 4A in the tire axial direction. The outer land portion 4A has a plurality of outer sipes 5 extending across the outer land portion 4A. The inner land portion 4B has a plurality of inner sipes 6 extending across the inner land portion 4B. The inner sipes 6 include a first inner sipe 6A and a second inner sipe 6B. The first inner sipe 6A has a wide portion 8 on a side inward of a sipe body portion 7 in the tire radial direction. The second inner sipe 6B does not have the wide portion 8 on a side inward of the sipe body portion 7 in the tire radial direction.

## Description

### BACKGROUND OF THE INVENTION

### Field of the Invention

The present invention relates to a tire.

### Background Art

Japanese Laid-Open Patent Publication No. 2023-071453 discloses a tire that includes a plurality of hexagonal blocks formed by circumferential grooves and lateral grooves. Each hexagonal block has a sipe extending in the tire axial direction, and a widened groove portion continuous with the inner side of the sipe in the tire radial direction. The tire as disclosed in Japanese Laid-Open Patent Publication No. 2023-071453 allows enhancement of wet performance while maintaining rolling resistance performance and wear resistance.

In recent years, rolling resistance performance and wear resistance have been required to be further enhanced by enhancing stiffness of a tread portion according to, for example, demands for low fuel consumption becoming high. However, such a tire has a problem that wet performance is likely to be degraded.

The present invention has been made in view of the aforementioned circumstances, and a main object of the present invention is to provide a tire that allows rolling resistance performance and wear resistance to be enhanced while maintaining wet performance.

### SUMMARY OF THE INVENTION

The present invention is directed to a tire including a tread portion. The tread portion includes a plurality of circumferential grooves extending in a tire circumferential direction, and a plurality of land portions demarcated by the plurality of circumferential grooves. The plurality of land portions include an outer land portion disposed on an outermost side in a tire axial direction, and an inner land portion disposed inward of the outer land portion in the tire axial direction. The outer land portion has a plurality of outer sipes extending across the outer land portion. The inner land portion has a plurality of inner sipes extending across the inner land portion. The plurality of inner sipes include a first inner sipe and a second inner sipe each having a sipe body portion having a width of less than 1.0 mm. The first inner sipe has a wide portion having a width greater than the sipe body portion on a side inward of the sipe body portion in a tire radial direction. The second inner sipe does not have the wide portion on a side inward of the sipe body portion in the tire radial direction.

The tire of the present invention has the above-described configuration, and thus allows rolling resistance performance and wear resistance to be enhanced while maintaining wet performance.

### BRIEF DESCRIPTION OF THE DRAWINGS

FIG. 1 is a development of a tread portion of a tire according to one embodiment of the present invention;
FIG. 2A is a transverse cross-sectional view of a first inner sipe;
FIG. 2B is a transverse cross-sectional view of a second inner sipe;
FIG. 3 is a transverse cross-sectional view of any one of circumferential grooves;
FIG. 4A is a transverse cross-sectional view of an outer sipe according to the present embodiment;
FIG. 4B is a transverse cross-sectional view of an outer sipe according to another embodiment;
FIG. 5 is a development of a tread portion according to another embodiment;
FIG. 6A is a transverse cross-sectional view of a circumferential groove according to another embodiment;
FIG. 6B is a transverse cross-sectional view of a circumferential groove according to still another embodiment;
FIG. 7A is a transverse cross-sectional view of a circumferential groove according to still another embodiment;
FIG. 7B is a transverse cross-sectional view of a circumferential groove according to still another embodiment;
FIG. 8A is a development of a tread portion according to still another embodiment;
FIG. 8B is a transverse cross-sectional view of a first inner sipe disposed in the tread portion in FIG. 8A;
FIG. 8C is a transverse cross-sectional view of an outer sipe and a second inner sipe disposed in the tread portion in FIG. 8A;
FIG. 9A is a transverse cross-sectional view of a first inner sipe according to still another embodiment; and
FIG. 9B is a transverse cross-sectional view of a first inner sipe according to still another embodiment.

### DETAILED DESCRIPTION

One embodiment of the present invention will be described below in detail with reference to the drawings. The drawings include exaggerated expressions and dimensional ratios expressed so as to be different from those of the actual structure in order to aid in understanding of the present invention. The same or common components are denoted by the same reference characters throughout embodiments, and repeated description may be omitted. The embodiments and specific structures illustrated in the drawings are for aiding in understanding of the present invention. Therefore, the present invention is not limited to the illustrated specific structures.

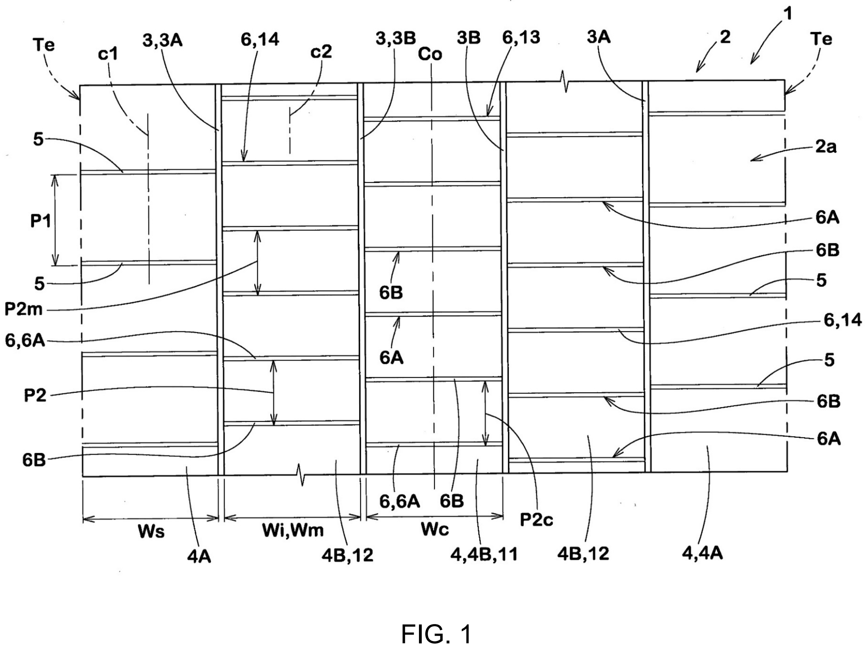

FIG. 1 is a development of a tread portion 2 of a tire 1 according to the present embodiment. FIG. 1 shows, for example, the tread portion 2 of a (heavy duty) pneumatic tire for trucks and buses. The present invention is applicable to various tires such as a pneumatic tire for a passenger car, an airless tire, and a tire for an industrial vehicle.

As shown in FIG. 1, the tread portion 2 of the present embodiment has a plurality of circumferential grooves 3 extending in the tire circumferential direction, and a plurality of land portions 4 demarcated by the plurality of circumferential grooves 3.

In the present embodiment, the plurality of land portions 4 include an outer land portion 4A disposed on the outermost side in the tire axial direction, and an inner land portion 4B disposed inward of the outer land portion 4A in the tire axial direction.

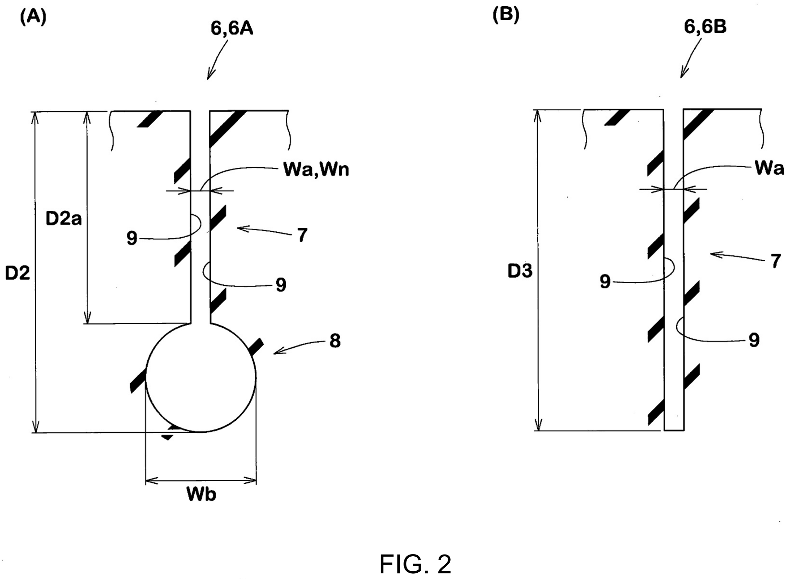

In the present embodiment, the outer land portion 4A has a plurality of outer sipes 5 extending across the outer land portion 4A. In the present embodiment, the inner land portion 4B has a plurality of inner sipes 6 extending across the inner land portion 4B. Such a tire 1 having the outer sipes 5 and the inner sipes 6 can scratch a water film on a wet road surface, guide the water to the circumferential grooves 3, and discharge the water. Therefore, the tire 1 has basic wet performance. The outer sipe 5 and the inner sipe 6 enhance land portion stiffness and enhance rolling resistance performance and wear resistance since opposing sipe walls (shown in FIG. 2) 9 come into contact with each other during contact with the ground.

The inner sipes 6 include a first inner sipe 6A and a second inner sipe 6B. FIG. 2A is a transverse cross-sectional view of the first inner sipe 6A. FIG. 2B is a transverse cross-sectional view of the second inner sipe 6B. As shown in FIG. 2A and FIG. 2B, each of the first inner sipe 6A and the second inner sipe 6B includes a sipe body portion 7 having a width Wa of less than 1.0 mm. In other words, each of the plurality of the inner sipes 6 includes the sipe body portion 7. The first inner sipe 6A has the sipe body portion 7, and a wide portion 8 having a width (maximum width) Wb greater than the sipe body portion 7 on a side inward of the sipe body portion 7 in the tire radial direction. The second inner sipe 6B has the sipe body portion 7, and does not have the wide portion 8 on a side inward of the sipe body portion 7 in the tire radial direction. The first inner sipe 6A having such a configuration allows an amount of a water film to be removed on a wet road surface to be increased in the wide portion 8. Furthermore, in a case where wear progresses, the wide portion 8 acts as a groove. Thus, high wet performance can be maintained by the first inner sipe 6A having the wide portion 8. The second inner sipe 6B can inhibit reduction of land portion stiffness of the inner land portion 4B, and thus enhances rolling resistance performance and wear resistance. In the present embodiment, the second inner sipe 6B is formed merely by the sipe body portion 7.

As shown in FIG. 1, for example, the plurality of circumferential grooves 3 include a pair of outer circumferential grooves 3A and a pair of inner circumferential grooves 3B. The outer circumferential grooves 3A are disposed adjacent to tread ends Te on both sides, respectively. For example, the inner circumferential grooves 3B are disposed between the tire equator Co and the respective outer circumferential grooves 3A.

The "tread end Te" refers to an outermost ground contact position in the tire axial direction in a case where the tire 1 is brought into contact with a plane at a camber angle of 0° in a standardized-load-applied state where a standardized load is applied to the tire 1 in a standardized state when the tire 1 is a pneumatic tire. The "tire equator Co" refers to the center position between the tread ends Te on both the sides in the tire axial direction.

In a case where the tire 1 is a pneumatic tire, the "standardized state" refers to a state where the tire 1 is mounted on a standardized rim and adjusted to have a standardized internal pressure, and no load is applied to the tire 1. Hereinafter, unless otherwise specified, dimensions and the like of components of the tire 1 are represented by values measured in the standardized state.

In a case where a standard system including a standard on which the tire is based is provided, the "standardized rim" represents a rim defined for each tire by the standard. Examples of the standardized rim include the "standard rim" in the JATMA standard, the "Design Rim" in the TRA standard, and the "Measuring Rim" in the ETRTO standard. In a case where a standard system including a standard on which the tire 1 is based is not provided, the "standardized rim" represents a rim which has the smallest rim width among rims on which the tire 1 can be mounted and which do not cause air leakage and have the smallest rim diameter.

In a case where a standard system including a standard on which the tire is based is provided, the "standardized internal pressure" represents an air pressure defined for each tire by the standard. Examples of the standardized internal pressure include the "maximum air pressure" in the JATMA standard, the maximum value recited in the table "TIRE LOAD LIMITS AT VARIOUS COLD INFLATION PRESSURES" in the TRA standard, and the "INFLATION PRESSURE" in the ETRTO standard. In a case where a standard system including a standard on which the tire 1 is based is not provided, the "standardized internal pressure" represents an air pressure defined for each tire by a manufacturer or the like.

In a case where a standard system including a standard on which the tire is based is provided, the "standardized load" represents a load defined for each tire by the standard. Examples of the standardized load include the "maximum load capacity" in the JATMA standard, the maximum value recited in the table "TIRE LOAD LIMITS AT VARIOUS COLD INFLATION PRESSURES" in the TRA standard, and the "LOAD CAPACITY" in the ETRTO standard. In a case where a standard system including a standard on which the tire is based is not provided, the "standardized load" represents a load defined for each tire by a manufacturer or the like as the maximum load that is applicable when the tire is used.

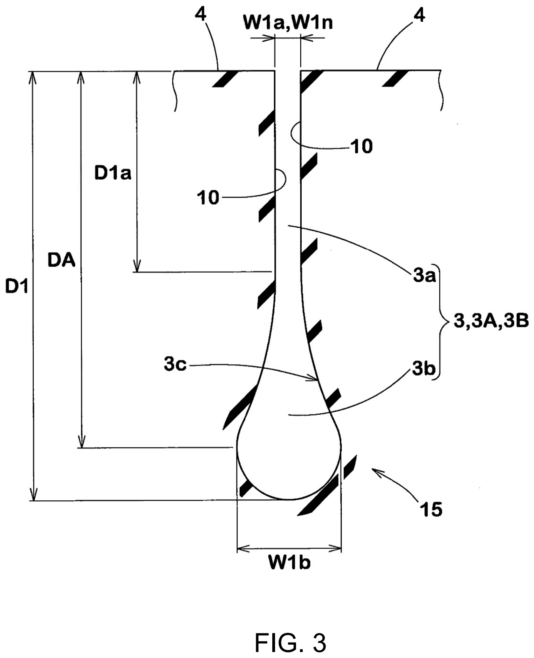

FIG. 3 is a transverse cross-sectional view of any one of the circumferential grooves 3. As shown in FIG. 3, at least one of the plurality of circumferential grooves 3 includes a narrow groove portion 3a in which a pair of groove walls 10 come into contact with each other during contact with the ground. The circumferential groove 3 having such a configuration inhibits deformation of the land portions 4 disposed on both sides of the circumferential groove 3 in the tire axial direction during contact with the ground, and thus allows rolling resistance performance and wear resistance of the tire 1 to be enhanced. For example, at least one of the plurality of circumferential grooves 3 further includes a wide groove portion 3b which is disposed inward of the narrow groove portion 3a in the tire radial direction and which has a great groove width. The wide groove portion 3b having such a configuration contributes to maintaining high wet performance from the initial stage of wear to the late stage of wear. The "during contact with the ground" means a time when the tire 1 in the standardized-load-applied state is in contact with a plane at a camber angle of 0°. The narrow groove portion 3a refers to a portion in which the groove width W1a is 3.0 mm or less. Furthermore, the wide groove portion 3b has a maximum groove width portion 15 having the maximum groove width in the tire radial direction.

In the present embodiment, each of the pair of outer circumferential grooves 3A and the pair of inner circumferential grooves 3B includes the narrow groove portion 3a and the wide groove portion 3b. Thus, the above-described effects are effectively exhibited. For example, in the circumferential grooves 3, either the pair of outer circumferential grooves 3A or the pair of inner circumferential grooves 3B may include the narrow groove portions 3a and the wide groove portions 3b. For example, in the circumferential grooves 3, either of the pair of outer circumferential grooves 3A and/or either of the pair of inner circumferential grooves 3B may include the narrow groove portion 3a and the wide groove portion 3b.

The circumferential groove 3 preferably includes an inflection portion 3c having a single arc-like shape between the narrow groove portion 3a and the wide groove portion 3b. The circumferential groove 3 having such a configuration gently changes when the narrow groove portion 3a disappears due to wear, and can reduce local uneven wear or chipping.

For example, the groove depth D1 of the circumferential groove 3 is preferably 7.5 mm or more and more preferably 9.0 mm or more, and preferably 17.0 mm or less and more preferably 15.5 mm or less. In the present embodiment, in the circumferential grooves 3, the outer circumferential groove 3A and the inner circumferential groove 3B have the same shape. In other words, the outer circumferential groove 3A and the inner circumferential groove 3B have the same groove depth and the same groove width. The groove depth of the outer circumferential groove 3A may be greater or less than the groove depth of the inner circumferential groove 3B.

The groove depth D1a of the narrow groove portion 3a is preferably 0.25 or more times the groove depth D1 of the circumferential groove 3 and more preferably 0.30 or more times the groove depth D1, and preferably 0.70 or less times the groove depth D1 and more preferably 0.65 or less times the groove depth D1. Since the groove depth D1a of the narrow groove portion 3a is 0.25 or more times the groove depth D1 of the circumferential groove 3, deformation of the land portion 4 can be assuredly inhibited during contact with the ground. Since the groove depth D1a of the narrow groove portion 3a is 0.70 or less times the groove depth D1 of the circumferential groove 3, the volume of the wide groove portion 3b can be increased, and degradation of drainage performance can be assuredly inhibited at the late stage of wear.

The maximum groove width W1b of the wide groove portion 3b is preferably 2.5 or more times the minimum groove width W1n of the narrow groove portion 3a and more preferably 3.0 or more times the minimum groove width W1n, and preferably 7.0 or less times the minimum groove width W1n and more preferably 5.0 or less times the minimum groove width W1n. Since the maximum groove width W1b of the wide groove portion 3b is 2.5 or more times the minimum groove width W1n of the narrow groove portion 3a, the wide groove portion 3b having a sufficient volume can be ensured, and degradation of drainage performance can be assuredly inhibited. Since the maximum groove width W1b of the wide groove portion 3b is 7.0 or less times the minimum groove width W1n of the narrow groove portion 3a, the wide groove portion 3b can be inhibited from being excessively large, and the land portion 4 can maintain high stiffness.

The minimum groove width W1n of the narrow groove portion 3a is preferably 1.0 mm or more and more preferably 1.5 mm or more, and preferably 3.0 mm or less and more preferably 2.5 mm or less. In a case where the minimum groove width W1n of the narrow groove portion 3a is 1.0 mm or more, drainage performance at the initial stage of wear can be enhanced. In a case where the minimum groove width W1n of the narrow groove portion 3a is 3.0 mm or less, deformation of the land portion 4 can be assuredly inhibited during contact with the ground.

As shown in FIG. 1, in the present embodiment, the circumferential groove 3 linearly extends in the tire circumferential direction. In the present embodiment, each of the outer circumferential groove 3A and the inner circumferential groove 3B linearly extends. The circumferential groove 3 may zigzag or extend in a wavy manner.

For example, the outer land portions 4A are disposed on both outer sides in the tire axial direction. For example, each of the outer land portions 4A is demarcated by the outer circumferential groove 3A and the tread end Te. For example, the inner land portions 4B include a crown land portion 11 demarcated by the pair of inner circumferential grooves 3B, and a pair of middle land portions 12 each demarcated by the inner circumferential groove 3B and the outer circumferential groove 3A. For example, the crown land portion 11 is disposed on the tire equator Co. For example, the middle land portions 12 are disposed between the crown land portion 11 and the respective outer land portions 4A. The inner land portions 4B are not limited to such a configuration. For example, the inner land portions 4B may merely include one crown land portion, the inner land portions 4B may merely include a pair of crown land portions, or the inner land portions 4B may include a pair of crown land portions and a pair of middle land portions (not shown).

In the present embodiment, the outer sipes 5 are disposed in each of the outer land portions 4A on both sides. In the present embodiment, the inner sipes 6 are disposed in each of the crown land portion 11 and the middle land portions 12 on both sides. In other words, the inner sipes 6 include crown sipes 13 disposed in the crown land portion 11, and middle sipes 14 disposed in the middle land portions 12 on both sides. The outer sipes 5 may be disposed merely in one of the outer land portions 4A. The inner sipes 6 may be disposed merely in the crown land portion 11, the inner sipes 6 may be disposed merely in the pair of middle land portions 12 without disposing the inner sipes 6 in the crown land portion 11, the inner sipes 6 may be disposed merely in one of the middle land portions 12, or the inner sipes 6 may be disposed in the crown land portion 11 and one of the middle land portions 12. In the present specification, the description for the inner sipe 6 is applicable to either of the crown sipe 13 and the middle sipe 14 except where otherwise specified. Furthermore, the crown land portion 11 is applied in the description for the crown sipe 13, and the middle land portion 12 is applied in the description for the middle sipe 14.

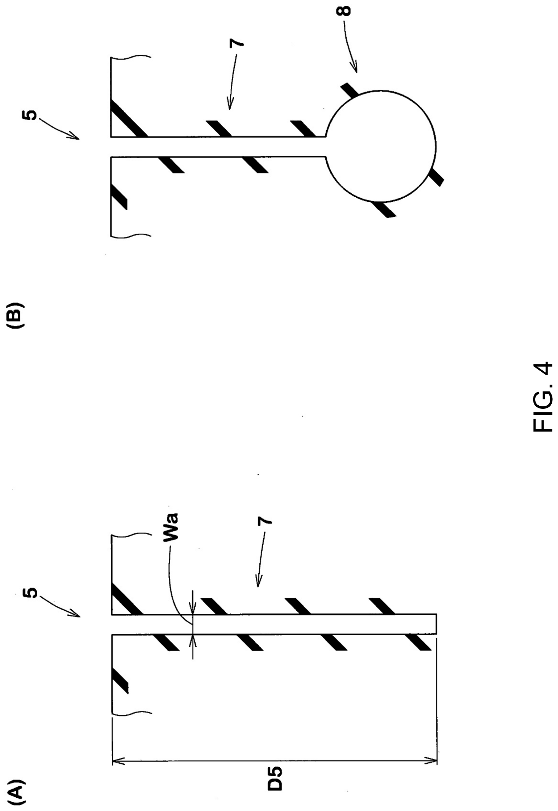

FIG. 4A is a transverse cross-sectional view of the outer sipe 5. As shown in FIG. 4A, the outer sipe 5 includes the sipe body portion 7 having the width Wa of less than 1.0 mm. The outer sipe 5 has the sipe body portion 7, and does not have the wide portion 8 (shown in FIG. 4B) on a side inward of the sipe body portion 7 in the tire radial direction. The outer sipe 5 having such a configuration allows the outer land portion 4A on which a relatively high lateral force acts to maintain stiffness and allows enhancement of wear resistance during cornering. The outer sipe 5 is not limited to such a configuration. The outer sipe 5 may be configured to include the sipe body portion 7 and the wide portion 8 disposed inward of the sipe body portion 7 in the tire radial direction (shown in FIG. 4B), similarly to the first inner sipe 6A. All the outer sipes 5 disposed in the outer land portion 4A have the same shape.

The depth D5 of the outer sipe 5 is preferably less than the groove depth D1 (shown in FIG. 3) of the circumferential groove 3. The depth D5 of the outer sipe 5 is not particularly limited, but is preferably 20% or more of the groove depth D1 of the outer circumferential groove 3A and more preferably 30% or more of the groove depth D1, and preferably 60% or less of the groove depth D1 and more preferably 50% or less of the groove depth D1.

As shown in FIG. 1, the outer sipe 5 and the inner sipe 6 linearly extend in the sipe longitudinal direction. As shown in FIG. 2, the inner sipe 6 (sipe body portion 7) linearly extends in the sipe depth direction. As shown in FIG. 4A, the outer sipe 5 (sipe body portion 7) linearly extends in the sipe depth direction. The outer sipe 5 and the inner sipe 6 having such configurations can inhibit reduction of stiffness of the tread portion 2. The "sipe longitudinal direction" represents the direction in which the outer sipe 5 and the inner sipe 6 extend on a ground contact surface 2a.

The first inner sipe 6A and the second inner sipe 6B alternate in the tire circumferential direction. The inner sipe 6 having such a configuration inhibits stiffness of the inner land portion 4B from being locally reduced, and thus contributes to enhancement of wear resistance. In the present embodiment, in each of the crown land portion 11 and the middle land portions 12, the first inner sipe 6A and the second inner sipe 6B alternate in the tire circumferential direction. The first inner sipe 6A and the second inner sipe 6B may alternate in the tire circumferential direction merely in the crown land portion 11, or the first inner sipe 6A and the second inner sipe 6B may alternate in the tire circumferential direction merely in the middle land portions 12.

A second pitch P2 in the tire circumferential direction between the inner sipes 6 adjacent to each other in the tire circumferential direction is preferably less than a first pitch P1 in the tire circumferential direction between the outer sipes 5 adjacent to each other in the tire circumferential direction. A relatively high ground contact pressure acts on the inner land portion 4B as compared with the outer land portion 4A. Therefore, the second pitch P2 is less than the first pitch P1, and thus, a drainage effect can be enhanced at the inner land portion 4B, so that higher wet performance can be maintained. Furthermore, the outer land portion 4A can maintain high stiffness. The first pitch P1 represents a value (average value) obtained by dividing the length (not shown) in the tire circumferential direction on the ground contact surface 2a at the mid-position c1 of the outer land portion 4A in the tire axial direction, by the number of the outer sipes 5. The second pitch P2 represents a value (average value) obtained by dividing the length (not shown) in the tire circumferential direction on the ground contact surface 2a at the mid-position c2 of the inner land portion 4B in the tire axial direction, by the number of the inner sipes 6.

In order to exhibit the above-described effects, the second pitch P2 is preferably 0.80 or less times the first pitch P1. Meanwhile, if the second pitch P2 is excessively less than the first pitch P1, stiffness of the inner land portion 4B is significantly reduced, and rolling resistance performance and wear resistance may be degraded. Therefore, the second pitch P2 is preferably 0.60 or more times the first pitch P1. In order to more effectively exhibit these effects, the second pitch P2 is more preferably 0.65 or more times the first pitch P1 and more preferably 0.75 or less times the first pitch P1. In one example, the second pitch P2 is preferably 0.60 to 0.80 times the first pitch P1, and more preferably 0.65 to 0.75 times the first pitch P1. Combination of the upper limit value and the lower limit value in these numerical value ranges can be discretionarily selected.

In the present embodiment, a pitch P2c in the tire circumferential direction between the crown sipes 13 adjacent to each other in the tire circumferential direction is equal to a pitch P2m in the tire circumferential direction between the middle sipes 14 adjacent to each other in the tire circumferential direction. The pitch P2c of the crown sipe 13 in the tire circumferential direction may be less than the pitch P2m of the middle sipe 14 in the tire circumferential direction. In such a configuration, the drainage effect of the crown land portion 11 on which a higher ground contact pressure acts is enhanced, and wet performance is enhanced.

The width Ws of the outer land portion 4A in the tire axial direction is preferably 1.0 or more times the first pitch P1. In a case where the width Ws of the outer land portion 4A in the tire axial direction is 1.0 or more times the first pitch P1, a density with which the outer sipes 5 are disposed can be enhanced, and wet performance of the tire 1 can be enhanced. From such a viewpoint, the width Ws of the outer land portion 4A is more preferably 1.5 or more times the first pitch P1. In a case where the outer circumferential groove 3A does not linearly extend, the width Ws of the outer land portion 4A is an intermediate (average) value between the maximum width and the minimum width of the outer land portion 4A in the tire axial direction. The width Wi of the inner land portion 4B as described below is similarly defined.

The width Ws of the outer land portion 4A is preferably 3.0 or less times the first pitch P1. In a case where the width Ws of the outer land portion 4A is 3.0 or less times the first pitch P1, stiffness of the outer land portion 4A can be enhanced, and wear resistance of the tire 1 can be enhanced. From such a viewpoint, the width Ws of the outer land portion 4A is more preferably 2.5 or less times the first pitch P1.

Thus, the width Ws of the outer land portion 4A is preferably 1.0 to 3.0 times the first pitch P1 and more preferably 1.5 to 2.5 times the first pitch P1. Combination of the upper limit value and the lower limit value in these numerical value ranges can be discretionarily selected.

The width Wi of the inner land portion 4B in the tire axial direction is preferably 1.4 or more times the second pitch P2. In a case where the width Wi of the inner land portion 4B is 1.4 or more times the second pitch P2, a density with which the inner sipes 6 are disposed can be enhanced, and wet performance of the tire 1 can be enhanced. From such a viewpoint, the width Wi of the inner land portion 4B is more preferably 1.5 or more times the second pitch P2.

The width Wi of the inner land portion 4B is preferably 3.0 or less times the second pitch P2. In a case where the width Wi of the inner land portion 4B is 3.0 or less times the second pitch P2, stiffness of the inner land portion 4B can be enhanced, and wear resistance of the tire 1 can be enhanced. From such a viewpoint, the width Wi of the inner land portion 4B is more preferably 2.5 or less times the second pitch P2.

Thus, the width Wi of the inner land portion 4B is preferably 1.4 to 3.0 times the second pitch P2, and more preferably 1.5 to 2.5 times the second pitch P2. Combination of the upper limit value and the lower limit value in these numerical value ranges can be discretionarily selected.

In the present embodiment, a ratio (Wc/P2c) of the width Wc of the crown land portion 11 in the tire axial direction to the pitch P2c of the crown sipe 13 is equal to a ratio (Wm/P2m) of the width Wm of the middle land portion 12 in the tire axial direction to the pitch P2m of the middle sipe 14. The ratio (Wc/P2c) may be greater or less than the ratio (Wm/P2m) as long as rolling resistance performance and wear resistance can be enhanced while wet performance is maintained.

As shown in FIG. 2A and FIG. 2B, the depth D3 of the second inner sipe 6B is preferably 0.50 or more times the depth D2 of the first inner sipe 6A. Since the depth D3 of the second inner sipe 6B is 0.50 or more times the depth D2 of the first inner sipe 6A, change of stiffness of the inner land portion 4B in the tire circumferential direction is maintained to be small, and thus, deformation of the inner land portion 4B and uneven wear are inhibited. From such a viewpoint, the depth D3 of the second inner sipe 6B is more preferably 0.60 or more times the depth D2 of the first inner sipe 6A.

The depth D3 of the second inner sipe 6B is preferably 1.05 or less times the depth D2 of the first inner sipe 6A. Since the depth D3 of the second inner sipe 6B is 1.05 or less times the depth D2 of the first inner sipe 6A, reduction of stiffness is inhibited over the entirety of the inner land portion 4B, and rolling resistance performance and wear resistance are enhanced. From such a viewpoint, the depth D3 of the second inner sipe 6B is more preferably 0.90 or less times the depth D2 of the first inner sipe 6A.

Thus, the depth D3 of the second inner sipe 6B is preferably 0.50 to 1.05 times the depth D2 of the first inner sipe 6A, and more preferably 0.60 to 0.90 times the depth D2. Combination of the upper limit value and the lower limit value in these numerical value ranges can be discretionarily selected.

The depth D2 of the first inner sipe 6A is less than the groove depth D1 (shown in FIG. 3) of the circumferential groove 3. Thus, stiffness of the tread portion 2 is inhibited from being excessively reduced. From such a viewpoint, the depth D2 of the first inner sipe 6A is preferably 0.8 or less times the groove depth D1 of the circumferential groove 3, and more preferably 0.7 or less times the groove depth D1. Meanwhile, if the depth D2 of the first inner sipe 6A is excessively small, the first inner sipe 6A may disappear early due to wear, so that it is difficult to maintain wet performance. Thus, the depth D2 of the first inner sipe 6A is preferably 0.4 or more times the groove depth D1 of the circumferential groove 3, and more preferably 0.5 or more times the groove depth D1. Furthermore, the depth D2 of the first inner sipe 6A is preferably equal to or less than the groove depth DA (shown in FIG. 3) of the maximum groove width portion 15. The first inner sipe 6A having such a configuration inhibits reduction of stiffness of the tread portion 2, and contributes to enhancement of wear resistance. From the viewpoint of enhancing rolling resistance performance and wear resistance while wet performance is maintained, the depth D2 of the first inner sipe 6A is preferably less than the groove depth DA of the maximum groove width portion 15 and more preferably 0.9 or less times the groove depth DA, and preferably 0.6 or more times the groove depth DA and more preferably 0.7 or more times the groove depth DA.

Thus, the depth D2 of the first inner sipe 6A is preferably 0.4 to 0.8 times the groove depth D1 of the circumferential groove 3, and more preferably 0.5 to 0.7 times the groove depth D1. Combination of the upper limit value and the lower limit value in these numerical value ranges can be discretionarily selected.

The maximum width Wb of the wide portion 8 is preferably 2.0 or more times the minimum width Wn of the sipe body portion 7 and more preferably 3.0 or more times the minimum width Wn, and preferably 8.0 or less times the minimum width Wn and more preferably 7.0 or less times the minimum width Wn. Since the maximum width Wb of the wide portion 8 is 2.0 or more times and 8.0 or less times the minimum width Wn of the sipe body portion 7, rolling resistance performance and wear resistance can be enhanced while wet performance is maintained.

The depth D2a of the sipe body portion 7 of the first inner sipe 6A is not particularly limited, but is preferably 45% or more of the depth D2 of the first inner sipe 6A and more preferably 55% or more of the depth D2, and preferably 85% or less of the depth D2 and more preferably 75% or less of the depth D2.

As shown in FIG. 1, in the tread portion 2 of the present embodiment, a lateral groove (not shown) having a groove width of 1.0 mm or more is not disposed. In other words, in the tread portion 2 of the present embodiment, the circumferential grooves 3, the outer sipes 5, and the inner sipes 6 are merely disposed. The tread portion 2 having such a configuration can maintain high land portion stiffness.

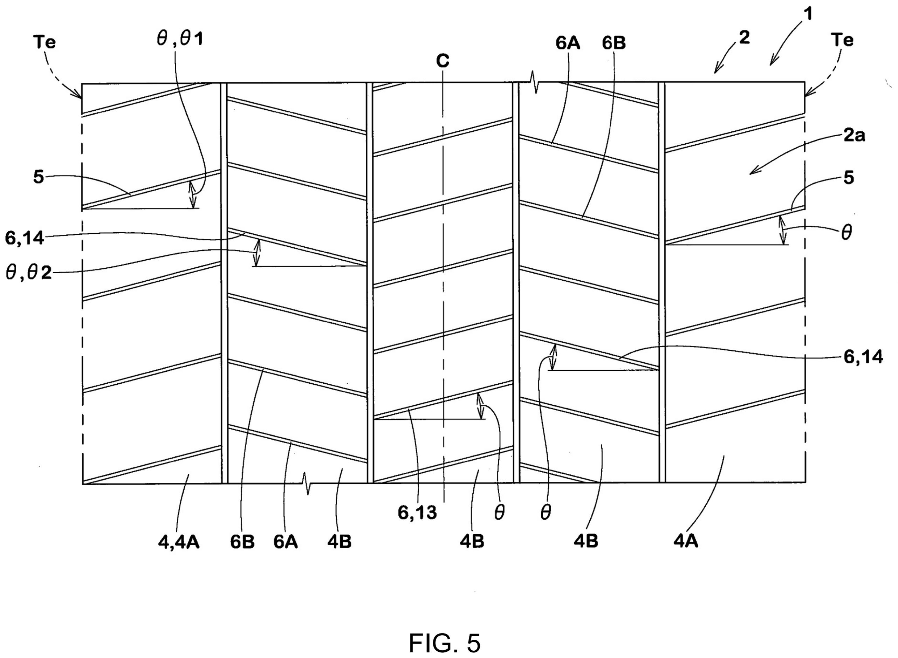

FIG. 5 is a development of the tread portion 2 according to another embodiment. As shown in FIG. 5, for example, the outer sipe 5 and the inner sipe 6 may be inclined relative to the tire axial direction. Thus, water smoothly flows and drainage is promoted, so that wet performance of the tire 1 can be enhanced.

An angle θ of each of the outer sipe 5 and the inner sipe 6 relative to the tire axial direction is preferably 25° or less. In a case where the angle θ is 25° or less, the land portion 4 at a connection portion between the circumferential groove 3 and the outer sipe 5 or the inner sipe 6 can be inhibited from having an acute angle, and local uneven wear or chipping can be reduced. From such a viewpoint, the angle θ is more preferably 20° or less. In a case where the outer sipe 5 or the inner sipe 6 does not linearly extend, the angle θ is specified by an imaginary straight line connecting between both ends of the outer sipe 5 or the inner sipe 6 in the tire axial direction.

In the present embodiment, the direction in which the middle sipe 14 is inclined is different from the direction in which the outer sipe 5 is inclined and the direction in which the crown sipe 13 is inclined. Such inclining directions allow enhancement of drainage performance and also contribute to enhancement of noise performance of the tire 1.

FIG. 5 shows an example in which the angles θ of the outer sipes 5 and the inner sipes 6 are equal to each other. However, the present invention is not limited to such a configuration. For example, the angle θ may be different for each land portion 4. Furthermore, an angle θ1 of the outer sipe 5 may be less than an angle θ2 of the inner sipe 6. The tire 1 having such a configuration can reduce uneven wear in the outer land portion 4A in which uneven wear is likely to occur, and can simultaneously enhance drainage performance at the inner land portion 4B in which a ground contact pressure is high.

For example, the inner sipes 6 extending parallel to the tire axial direction and the inner sipes 6 inclined relative to the tire axial direction may be mixed. More specifically, the first inner sipe 6A may extend parallel to the tire axial direction, and the second inner sipe 6B may be inclined relative to the tire axial direction. The first inner sipe 6A may be inclined relative to the tire axial direction, and the second inner sipe 6B may extend parallel to the tire axial direction (not shown).

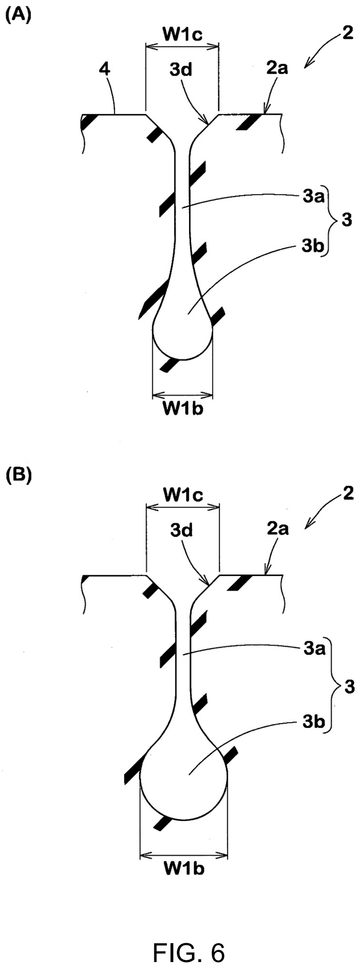

FIG. 6A is a cross-sectional view of the circumferential groove 3 according to another embodiment. As shown in FIG. 6A, in this embodiment, the circumferential groove 3 includes a chamfered portion 3d extending from the ground contact surface 2a so as to be tapered on the outer side of the narrow groove portion 3a in the tire radial direction. The circumferential groove 3 having such a configuration can enhance drainage performance at the initial stage of wear and can enhance wet performance without reducing stiffness of the land portion 4.

In the chamfered portion 3d of the circumferential groove 3 of this embodiment, the opening width W1c of the chamfered portion 3d is greater than the maximum groove width W1b of the wide groove portion 3b. The chamfered portion 3d having such a configuration can more assuredly enhance drainage performance at the initial stage of wear. The maximum groove width W1b of the wide groove portion 3b of the circumferential groove 3 may be greater than the opening width W1c of the chamfered portion 3d (shown in FIG. 6B). The wide groove portion 3b having such a configuration can more assuredly enhance drainage performance at the late stage of wear. Each of the pair of outer circumferential grooves 3A and the pair of inner circumferential grooves 3B may have the configuration shown in FIG. 6A or the configuration shown in FIG. 6B. At least one groove of the pair of outer circumferential grooves 3A and the pair of inner circumferential grooves 3B may have the configuration shown in FIG. 6A or the configuration shown in FIG. 6B.

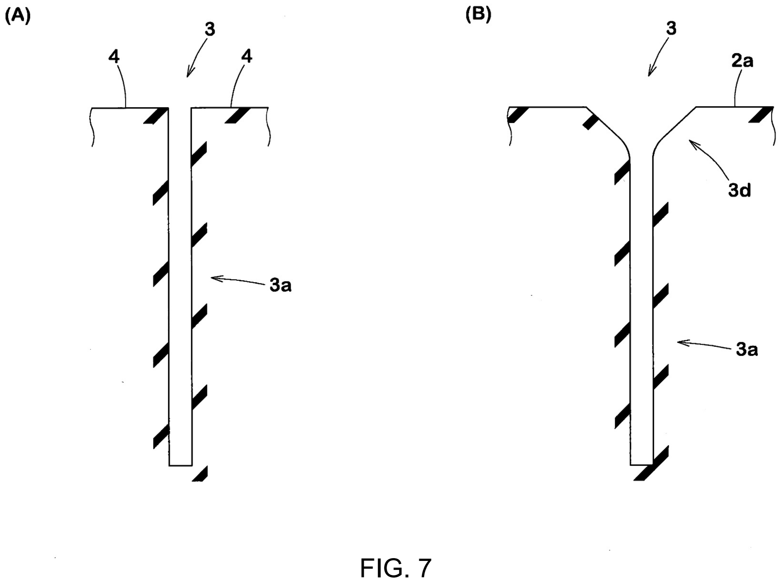

FIG. 7A is a transverse cross-sectional view of the circumferential groove 3 according to still another embodiment. As shown in FIG. 7A, the circumferential groove 3 of this embodiment includes the narrow groove portion 3a, and does not include a great width portion (not shown) on a side inward of the narrow groove portion 3a in the tire radial direction. In other words, the circumferential groove 3 is formed merely of the narrow groove portion 3a. The circumferential groove 3 having such a configuration inhibits reduction of stiffness of the land portion 4.

FIG. 7B is a transverse cross-sectional view of the circumferential groove 3 according to still another embodiment. As shown in FIG. 7B, the circumferential groove 3 of this embodiment includes the narrow groove portion 3a and the chamfered portion 3d extending from the ground contact surface 2a so as to be tapered on the outer side of the narrow groove portion 3a in the tire radial direction, and does not include a great width portion (not shown) on a side inward of the narrow groove portion 3a in the tire radial direction. The circumferential groove 3 having such a configuration can enhance wear resistance while maintaining high wet performance. Each of the pair of outer circumferential grooves 3A and the pair of inner circumferential grooves 3B may have the configuration shown in FIG. 7A or the configuration shown in FIG. 7B. At least one groove of the pair of outer circumferential grooves 3A and the pair of inner circumferential grooves 3B may have the configuration shown in FIG. 7A or the configuration shown in FIG. 7B.

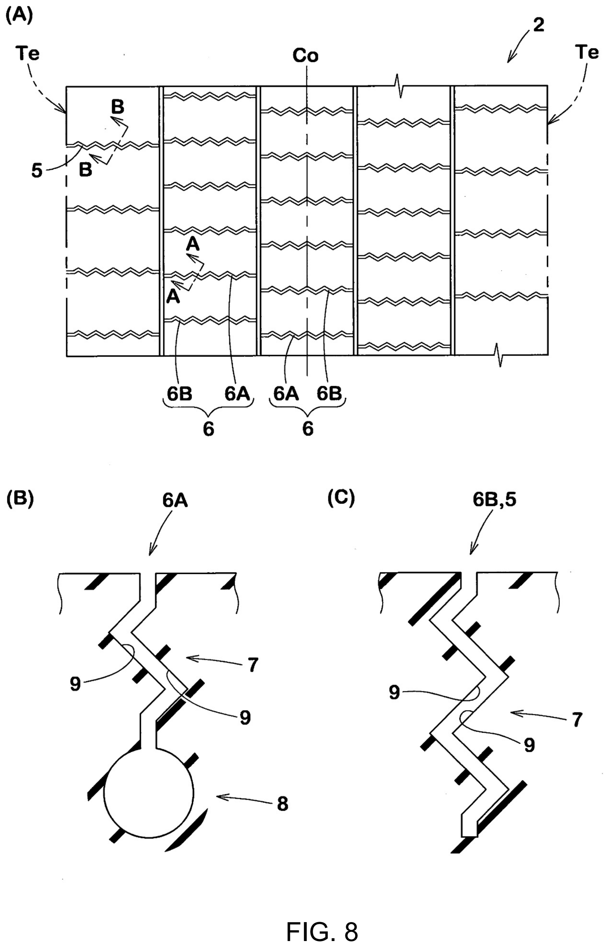

FIG. 8A is a development of the tread portion 2 according to another embodiment. FIG. 8B is a cross-sectional view taken along a line A-A in FIG. 8A. FIG. 8C is a cross-sectional view taken along a line B-B in FIG. 8A. FIG. 8B shows a transverse cross-section of the first inner sipe 6A. FIG. 8C shows a transverse cross-section of the outer sipe 5 and the second inner sipe 6B. As shown in FIG. 8, in this embodiment, the outer sipe 5 and the inner sipe 6 zigzag in the sipe depth direction and the sipe longitudinal direction. In this embodiment, each sipe body portion 7 zigzags in the sipe depth direction and the sipe longitudinal direction. In the outer sipe 5 and the inner sipe 6 having such configurations, the sipe walls 9 of the sipe body portion 7 support each other so as to mesh with each other, and thus, stiffness of each land portion is maintained to be higher.

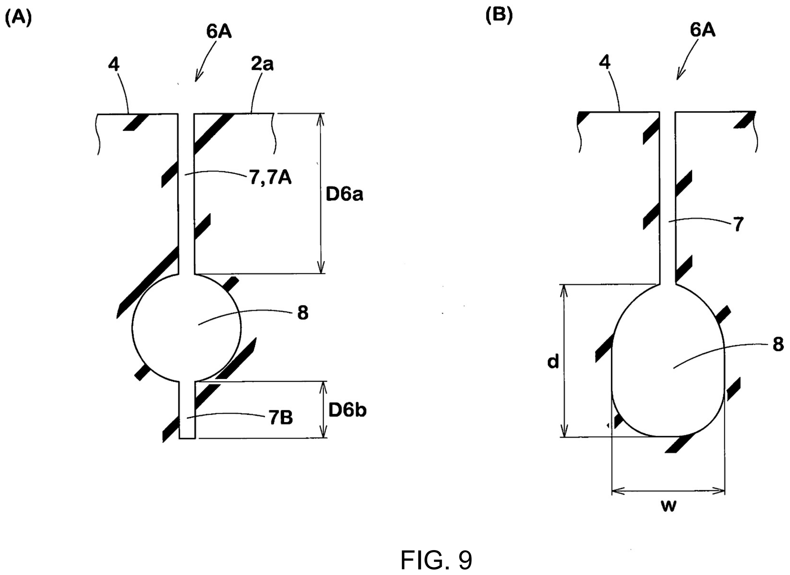

FIG. 9A is a transverse cross-sectional view of the first inner sipe 6A according to still another embodiment. As shown in FIG. 9A, the first inner sipe 6A of this embodiment includes the sipe body portion 7 and the wide portion 8. The sipe body portion 7 includes a first sipe body portion 7A disposed outward of the wide portion 8 in the tire radial direction and a second sipe body portion 7B disposed inward of the wide portion 8 in the tire radial direction. The first inner sipe 6A including the second sipe body portion 7B having such a configuration can enhance a drainage effect at a relatively early stage of wear.

The length D6a of the first sipe body portion 7A in the tire radial direction is greater than the length D6b of the second sipe body portion 7B in the tire radial direction. Thus, an effect of enhancing rolling resistance performance and wear resistance according to deformation of the land portion 4 during contact with the ground is maintained. From the viewpoint of maintaining wet performance and enhancing rolling resistance performance and wear resistance in a well-balanced manner, the length D6a of the first sipe body portion 7A is preferably 2.0 or more times the length D6b of the second sipe body portion 7B and more preferably 2.5 or more times the length D6b, and preferably 4.0 or less times the length D6b and more preferably 3.5 or less times the length D6b.

FIG. 9B is a transverse cross-sectional view of the first inner sipe 6A according to still another embodiment. As shown in FIG. 9B, the first inner sipe 6A of this embodiment includes the sipe body portion 7 and the wide portion 8. In the wide portion 8 of this embodiment, the length d in the tire radial direction is greater than the maximum width w. The first inner sipe 6A having such a configuration allows enhancement of stiffness of the land portion 4 in the tire radial direction and enhancement of wear resistance, and also allows enhancement of drainage performance.

Although the particularly preferable embodiments of the present invention have been described above in detail, the present invention is not limited to the above-described embodiments, and various modifications can be made to implement the present invention.

### [Additional notes]

The present invention includes the following configurations.

### [Present invention 1]

A tire including
a tread portion, wherein
the tread portion includes a plurality of circumferential grooves extending in a tire circumferential direction, and a plurality of land portions demarcated by the plurality of circumferential grooves,
the plurality of land portions include an outer land portion disposed on an outermost side in a tire axial direction, and an inner land portion disposed inward of the outer land portion in the tire axial direction,
the outer land portion has a plurality of outer sipes extending across the outer land portion,
the inner land portion has a plurality of inner sipes extending across the inner land portion,
the plurality of inner sipes include a first inner sipe and a second inner sipe each having a sipe body portion having a width of less than 1.0 mm,
the first inner sipe has a wide portion having a width greater than the sipe body portion on a side inward of the sipe body portion in a tire radial direction, and
the second inner sipe does not have the wide portion on a side inward of the sipe body portion in the tire radial direction.

### [Present invention 2]

The tire according to the present invention 1, wherein the first inner sipe and the second inner sipe alternate in the tire circumferential direction.

### [Present invention 3]

The tire according to the present invention 1 or 2, wherein a depth of the second inner sipe is 0.50 to 1.05 times a depth of the first inner sipe.

### [Present invention 4]

The tire according to any one of the present inventions 1 to 3, wherein the depth of the first inner sipe is 0.4 to 0.8 times a groove depth of each circumferential groove.

### [Present invention 5]

The tire according to any one of the present inventions 1 to 4, wherein a maximum width of the wide portion is 2.0 to 8.0 times a minimum width of the sipe body portion.

### [Present invention 6]

The tire according to any one of the present inventions 1 to 5, wherein a second pitch in the tire circumferential direction between the inner sipes adjacent to each other in the tire circumferential direction is less than a first pitch in the tire circumferential direction between the outer sipes adjacent to each other in the tire circumferential direction.

### [Present invention 7]

The tire according to the present invention 6, wherein a width of the outer land portion in the tire axial direction is 1.0 to 3.0 times the first pitch.

### [Present invention 8]

The tire according to the present invention 6, wherein a width of the inner land portion in the tire axial direction is 1.4 to 3.0 times the second pitch.

### [Present invention 9]

The tire according to any one of the present inventions 1 to 8, wherein the outer sipes and/or the inner sipes zigzag in a sipe depth direction and a sipe longitudinal direction.

### [Present invention 10]

The tire according to any one of the present inventions 1 to 9, wherein at least one of the plurality of circumferential grooves includes a narrow groove portion in which a pair of groove walls come into contact with each other during contact with a ground.

### [Present invention 11]

The tire according to the present invention 10, wherein at least one of the plurality of circumferential grooves further includes a wide groove portion which is disposed inward of the narrow groove portion in the tire radial direction and which has a great groove width.

### [Present invention 12]

The tire according to any one of the present inventions 1 to 11, wherein at least one of the plurality of circumferential grooves includes a chamfered portion extending from a ground contact surface so as to be tapered.

### [Present invention 13]

The tire according to any one of the present inventions 1 to 12, wherein the tread portion does not have a lateral groove having a groove width of 1.0 mm or more.

## Claims

1. A tire (1) comprising
a tread portion (2), wherein
the tread portion (2) includes a plurality of circumferential grooves (3) extending in a tire circumferential direction, and a plurality of land portions (4) demarcated by the plurality of circumferential grooves (3),
the plurality of land portions (4) include an outer land portion (4A) disposed on an outermost side in a tire axial direction, and an inner land portion (4B) disposed inward of the outer land portion (4A) in the tire axial direction,
the outer land portion (4A) has a plurality of outer sipes (5) extending across the outer land portion (4A),
the inner land portion (4B) has a plurality of inner sipes (6) extending across the inner land portion (4B),
the plurality of inner sipes (6) include a first inner sipe (6A) and a second inner sipe (6B) each having a sipe body portion (7) having a width (Wa) of less than 1.0 mm,
the first inner sipe (6A) has a wide portion (8) having a width (Wb) greater than the sipe body portion (7) on a side inward of the sipe body portion (7) in a tire radial direction, and
the second inner sipe (6B) does not have the wide portion (8) on a side inward of the sipe body portion (7) in the tire radial direction.

2. The tire (1) according to claim 1, wherein the first inner sipe (6A) and the second inner sipe (6B) alternate in the tire circumferential direction.

3. The tire (1) according to claim 1 or 2, wherein a depth (D3) of the second inner sipe (6B) is 0.50 to 1.05 times a depth (D2) of the first inner sipe (6A).

4. The tire (1) according to any one of claims 1 to 3, wherein the depth (D2) of the first inner sipe (6A) is 0.4 to 0.8 times a groove depth (D1) of each circumferential groove (3).

5. The tire (1) according to any one of claims 1 to 4, wherein a maximum width (Wb) of the wide portion (8) is 2.0 to 8.0 times a minimum width (Wn) of the sipe body portion (7).

6. The tire (1) according to any one of claims 1 to 5, wherein a second pitch (P2) in the tire circumferential direction between the inner sipes (6) adjacent to each other in the tire circumferential direction is less than a first pitch (P1) in the tire circumferential direction between the outer sipes (5) adjacent to each other in the tire circumferential direction.

7. The tire (1) according to claim 6, wherein a width (Ws) of the outer land portion (4A) in the tire axial direction is 1.0 to 3.0 times the first pitch (P1).

8. The tire (1) according to claim 6, wherein a width (Wi) of the inner land portion (4B) in the tire axial direction is 1.4 to 3.0 times the second pitch (P2).

9. The tire (1) according to any one of claims 1 to 8, wherein the outer sipes (5) and/or the inner sipes (6) zigzag in a sipe depth direction and a sipe longitudinal direction.

10. The tire (1) according to any one of claims 1 to 9, wherein at least one of the plurality of circumferential grooves (3) includes a narrow groove portion (3a) in which a pair of groove walls (10) come into contact with each other during contact with a ground.

11. The tire (1) according to claim 10, wherein at least one of the plurality of circumferential grooves (3) further includes a wide groove portion (3b) which is disposed inward of the narrow groove portion (3a) in the tire radial direction and which has a great groove width.

12. The tire (1) according to any one of claims 1 to 11, wherein at least one of the plurality of circumferential grooves (3) includes a chamfered portion (3d) extending from a ground contact surface (2a) so as to be tapered.

13. The tire (1) according to any one of claims 1 to 12, wherein the tread portion (2) does not have a lateral groove having a groove width of 1.0 mm or more.
